# EUROPEAN PATENT APPLICATION

(11) **EP 1 258 652 A2**
(43) Date of publication of application: **20.11.2002**
(21) Application number: 02011027.6
(22) Date of filing: 17.05.2002
(51) Int. Cl.: F16G 5/16

(54) **Belt for variable-speed drives with a continuously variable velocity ratio**

(30) Priority: 18.05.2001 IT TO20010469
(71) Applicant: DAYCO EUROPE S.r.l., 64010 Colonnella (Teramo) (IT)
(72) Inventor: Lolli, Sergio, 63100 Ascolipiceno (IT); Celio, Luigi, 66017 Talena (IT)
(74) Representative: Franzolin, Luigi

(57) **Abstract**

A belt (1) for variable-speed drives with a continuously variable velocity ratio, the belt (1) having an endless, flexible, inner continuous band (2) made of a first elastomeric material; a number of friction blocks (3) made of plastic material, distributed along the continuous band (2), and having a trapezoidal cross section to engage a trapezoidal groove of a pulley; and a number of interstitial elements (21) made of a second elastomeric material having a lower elastic modulus than the plastic material of the blocks (3) and the first elastomeric material; each interstitial element (21) connecting two blocks (3) in a respective pair of adjacent blocks (3).

## Description

The present invention relates to a belt for variable-speed drives with a continuously variable velocity ratio.

As is known, variable-speed drives with a continuously variable velocity ratio (CVT drives) normally employ endless, substantially trapezoidal-section belts, the lateral friction surfaces of which cooperate with respective sides of trapezoidal-grooved pulleys; and the velocity ratio is varied by known mechanisms altering the groove width and hence the pitch diameter of the pulleys.

Low-power variable-speed drives usually employ endless belts reinforced internally with longitudinal cords of synthetic material and/or metal, and having a body made of elastomeric material and having both external and internal transverse grooves (i.e . facing inwards of the loop formed by the belt) . The transverse grooves define, on the endless belt, low inner and outer teeth to improve the flexibility of the belt so that it can be wound about relatively small-diameter pulleys with no drastic reduction in the surface area of the sides of the belt.

Known endless belts of the above type, in which power is transmitted by direct contact between the elastomeric material of the belt body and the pulleys, are unsuitable for high-power transmission, as, for example, in automotive variable-speed drives.

These normally employ metal belts, which, however, besides being relatively expensive and heavy, are exclusively oil-bath operated and therefore of limited application.

In an attempt to overcome this limitation, dry-operated drive belts have been proposed comprising a continuous endless band having a body of elastomeric material reinforced internally with longitudinal textile and/or metal cords, and shaped externally to form a succession of inner teeth and a succession of outer teeth; and a number of friction elements or blocks, which are arranged along the continuous band to correspond with respective teeth on the body of elastomeric material, and have lateral surfaces defining, as a whole, the lateral friction surfaces of the belt.

This type of belt has the drawback, when used for transmitting relatively high power for prolonged periods of time, of the continuous band cracking at the friction block joints, probably due to the cyclically variable fatigue stress transmitted by the friction blocks to the continuous band, and to consequent cyclic deformation of the continuous band itself.

It is an object of the present invention to provide a belt, particularly for high-power CVT variable-speed drives, which is suitable for use, for example, in automotive CVT variable-speed drives, and which provides for eliminating the aforementioned drawbacks.

According to the present invention, there is provided a belt for variable-speed drives with a continuously variable velocity ratio, the belt comprising an endless, continuous band made of a first elastomeric material; and a number of friction blocks made of plastic material and fixed, spaced apart from one another, along said continuous band; and being characterized by comprising a number of interstitial elements made of a second elastomeric material having a lower elastic modulus than said plastic material and said first elastomeric material; each interstitial element being located between the two blocks in a respective pair of adjacent blocks.

In a preferred embodiment of the belt defined above, each said interstitial element integrally connects the two blocks in the respective pair of adjacent blocks.

A non- limiting embodiment of the present invention will be described by way of example with reference to the accompanying drawings, in which:
Figure 1 shows a side view of part of a belt in accordance with the present invention;
Figure 2 shows a larger-scale section along line II-II in Figure 1;
Figure 3 shows a larger-scale, partially sectioned side view of part of the Figure 1 belt;
Figure 4 shows a partially sectioned plan view of part of the Figure 1 belt.

Number 1 in the accompanying drawings indicates as a whole a belt for a variable-speed drive (not shown) with a continuously variable velocity ratio (CVT drive ) .

Belt 1 comprises an annular continuous band 2; and a number of friction blocks 3 spaced apart and secured to continuous band 2, and the respective lateral surfaces 4 of which cooperate frictionally with known trapezoidal -grooved transmission pulleys (not shown) .

More specifically, continuous band 2 is made of elastomeric material, e.g. HNBR, and substantially comprises a body 5 having inner teeth 6 and outer teeth 7; and a number of cords 8 made of substantially inextensible synthetic and/or metal material (inextensible within the normal stress range) , embedded in body 5, and extending longitudinally and parallel to one another along body 5. Cords 8 are preferably formed using a conventional spiraling technique, and are preferably defined by glass or aramidic fibers, e.g. of the type known commercially as Kevlar®.

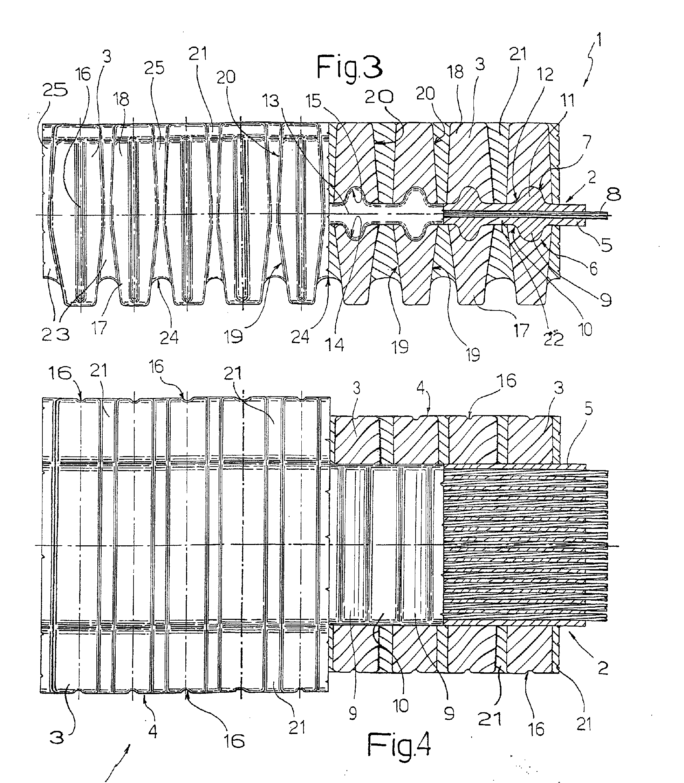

With particular reference to Figure 3, inner teeth 6 comprise a number of teeth 9 alternating with cavities 10; outer teeth 7 comprise a number of teeth 11 alternating with cavities 12; teeth 9 and 11 are substantially similar and in phase with one another; and each tooth 9, 11 has a curved convex outer profile.

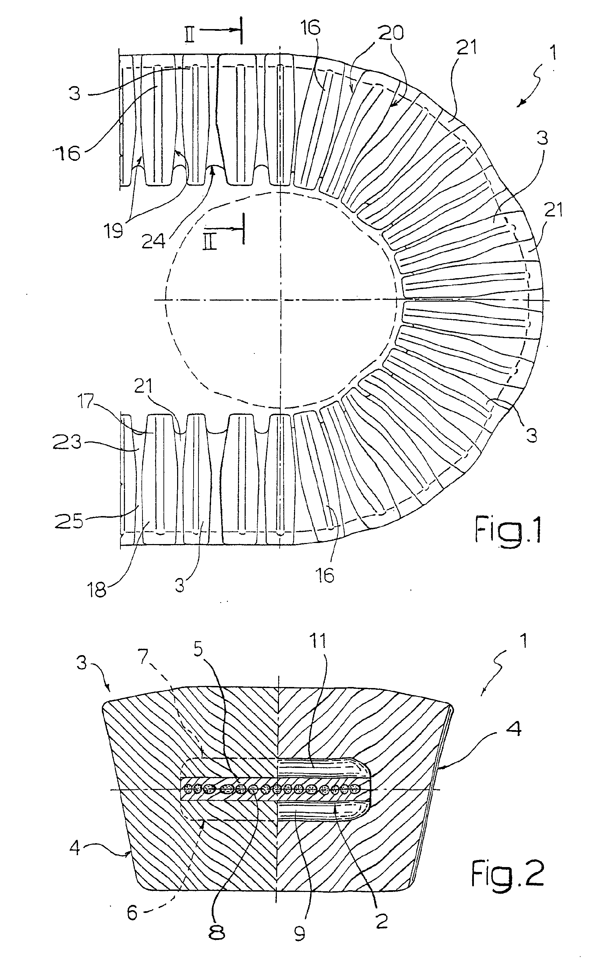

Blocks 3 are made of plastic material and are arranged long body 5 so that each fully incorporates a respective tooth 9 and corresponding tooth 11. When sectioned in a plane crosswise to continuous band 2, each block 3 is substantially trapezoidal (Figure 2) and comprises a central through cavity 13 engaged by continuous band 2 (Figure 4). More specifically, the two sides of the inner surface of central cavity 13 respectively facing inner teeth 6 and outer teeth 7 have respective recesses 14 and 15, the surfaces of which are complementary to those of a respective tooth 9 and a respective tooth 11.

Each lateral surface 4 of each block 3 is substantially flat and has a central groove 16 lying in a plane crosswise to continuous band 2. Each block 3 (Figure 3) comprises an inner portion 17, i.e. extending from body 5 inwards of the loop formed by belt 1; and an outer portion 18 extending outwards of belt 1 from body 5. Inner portion 17 is defined longitudinally by two surfaces 19 converging inwards of belt 1, and is therefore tapered in longitudinal section so that belt 1 (Figure 1) can be wound about pulleys (not shown) with relatively small radii - in particular, radii of more or less the same size as the thickness of belt 1 - with no interference between adjacent blocks 3. Outer portion 18 of each block 3 is also tapered outwards and defined, longitudinally with respect to belt 1, by two converging surfaces 20.

Belt 1 also comprises interstitial elements 21 made of elastomeric material of relatively low hysteresis and of a lower elastic modulus than the plastic material of blocks 3 and the elastomeric material of body 5.

Bearing in mind that any material, and elastomeric material in particular, is characterized dynamo-mechanically by the elastic component of the dynamic modulus (G') as the elastic modulus, and by the loss factor (Tanδ) as a quantification of hysteresis, the G' and Tanδ ranges (measured by ASTM Method D5992) of the materials of interstitial elements 21 (material A), of body 5 (material B), and of blocks 3 (material C) may be roughly the following:

| **MATERIALS** | A | B | C |
|---|---|---|---|
| **G' (Mpa)** | **9.0<G'<25.0** | **33.0<G'<66.0** | **80<G'** |
| **Tanδ (70°C)** | **0.07<Tanδ<0.14** | **0.23<Tanδ<0.34** | |

Each interstitial element 21 is fixed along continuous band 2 to incorporate completely a respective portion 22 of continuous band 2 extending between the two blocks 3 in a respective pair of adjacent blocks 3, and comprises an inner portion 23 extending inwards of belt 1 from body 5 and defined longitudinally by the corresponding surfaces 19 of the two adjacent blocks 3, and internally, i.e. along its end furthest from body 5, by a concave surface 24. Each interstitial element 21 also comprises an outer portion 25 extending outwards of belt 1 from body 5 and defined longitudinally by the corresponding surfaces 20 of the two adjacent blocks 3.

The plastic material of blocks 3 may be thermoplastic or heat-setting, and may or may not adhere to the elastomeric material of body 5 of continuous band 2. In fact, by virtue of the shaped fit of blocks 3 and continuous band 2, load is transmitted substantially by mechanical connection as opposed to adhesion, i.e. chemical bonding of the materials, so that the materials can be selected according to mechanical stress, with substantially no restrictions posed by the elastomeric material of body 5 having to adhere to the plastic material of blocks 3. Interstitial elements 21, on the other hand, must preferably adhere to blocks 3, so that interstitial elements 21 are defined longitudinally, about the whole of the pulleys, by two surfaces 19 and two surfaces 20.

The method of fabricating belt 1 substantially comprises a known first step of forming, normally molding, continuous band 2 ; a second step of placing continuous band 2 inside a mold (not shown) having a number of cavities of the same shape and number as blocks 3 of belt 1, so that each cavity houses a pair of opposite teeth 9, 11; a third, molding, step wherein the plastic material of blocks 3 is injected into the cavities; and a fourth step wherein the elastomeric material of interstitial elements 21 is injected into the gaps between the two blocks 3 in respective pairs of adjacent blocks 3.

Belt 1 is therefore extremely easy and cheap to produce, with no painstaking operations involving the formation, handling and assembly of a large number of component parts.

Moreover, both in expansion and compression, interstitial elements 21 act as shock-absorbers for not only damping the stress transmitted, in use, by blocks 3 to continuous band 2 as they travel along a curved path, but also allowing blocks 3 to interact with one another to eliminate critical stress concentrations which would otherwise occur on continuous band 2, at the bases of blocks 3, if blocks 3 were independent, as in the known state of the art.

## Claims

1. A belt for variable-speed drives with a continuously variable velocity ratio, the belt (1) comprising an endless, continuous band (2) made of a first elastomeric material; and a number of friction blocks (3) made of plastic material and fixed, spaced apart from one another, along said continuous band; and being **characterized by** comprising a number of interstitial elements (21) made of a second elastomeric material having a lower elastic modulus than said plastic material and said first elastomeric material; each interstitial element (21) being located between the two blocks (3) in a respective pair of adjacent blocks (3).

2. A belt as claimed in Claim 1, wherein said second elastomeric material has a lower hysteresis than said first elastomeric material.

3. A belt as claimed in Claim 1 or 2, wherein each said interstitial element (21) integrally connects the two blocks (3) in the respective pair of adjacent blocks (3).

4. A belt as claimed in one of the foregoing Claims, wherein said continuous band (2) comprises an endless body (5), and a number of first teeth (11) distributed externally, and a number of second teeth (9) distributed internally along said endless body (5); and wherein each block (3) incorporates at least one of said first teeth (11) and at least one of said second teeth (9) .

5. A belt as claimed in one of the foregoing Claims, wherein said continuous band (2) is reinforced internally with longitudinal threadlike elements (8).

6. A belt as claimed in one of the foregoing Claims, wherein each of said blocks (3) is formed in one piece completely surrounding said continuous band (2) and having a central through cavity (13) engaged by said continuous band (2) and having recesses (14, 15) shaped to fit with said respective first and second tooth (11, 9).
